# EUROPEAN PATENT SPECIFICATION

(11) **EP 1 763 640 B1**
(45) Date of publication and mention of the grant of the patent: **25.06.2008**
(21) Application number: 05801622.1
(22) Date of filing: 07.11.2005
(51) Int. Cl.: F16C 11/06, F16C 33/14, F16C 33/20

(54) **IMPROVEMENTS IN OR RELATING TO BEARINGS**
VERBESSERUNGEN AN ODER IM ZUSAMMENHANG MIT LAGERN
AMELIORATIONS DE PALIERS OU CONCERNANT CEUX-CI

(30) Priority: 12.11.2004 GB 0425083; 30.09.2005 GB 0519964
(43) Date of publication of application: 21.03.2007
(73) Proprietor: MINEBEA Co., Ltd., Kitasaku-gun, Nagano 389-0206 (JP); Beldam Crossley Ltd, Bolton, Lancashire BL1 6PB (GB)
(72) Inventor: SMITH, Paul, Raymond c/o NMB-Minebea UK Ltd., Lincoln LN6 3RA (GB); RICHARDSON, George, Anthony, Lincoln LN6 3RA (GB); GREENWOOD, Tony c/o Beldam Crossley Ltd., Bolton Lancashire BL1 6PB (GB)
(74) Representative: Hoarton, Lloyd Douglas Charles
(86) International application number: PCT/GB2005/004294
(87) International publication number: WO 2006/051277

(56) References cited:
- DE-A1- 1 775 316
- GB-A- 869 221
- US-A- 2 728 698
- US-A- 3 059 318
- US-A- 3 239 257
- US-A- 3 562 885
- US-B1- 6 213 675

## Description

This invention relates to bearings and, in particular, to the manufacture of self-lubricated spherical bearings.

In order for a particular bearing to operate effectively, it is necessary to provide some form of lubrication between the bearing member and the bearing housing within which the bearing member is seated so as to avoid, as far as possible, progressive wearing and/or damage of the bearing member and bearing housing due to frictional forces.

It is well known to provide a liquid lubricant in the form of a grease between the contacting surfaces of the bearing member and bearing housing. However, the use of grease has several disadvantages, including the need to regularly replenish the lubricant over the life of the bearing in order to avoid excessive wear, with "automatic" replenishment also requiring the provision of a grease reservoir in fluid communication with the bearing surface between the bearing member and the bearing housing. Furthermore, in certain applications, the operating environment of the bearing may have an adverse effect on the performance of a liquid lubricant such as grease. For example, in the case where the bearing is operating within an environment immersed in a fluid, there may be an unsatisfactory degradation in the grease as a result of interaction between the grease and the surrounding fluid.

To overcome the above problems, it is preferable to employ a solid lubricant in the form of a self-lubricating liner disposed between the bearing surface and the bearing housing, self-lubricating liners are formed of a wire mesh material impregnated with a low friction material such as Teflon™, Crossflon™ or the like. The use of such a lubricating liner in so-called "self-lubricating" bearings is well known. Conventionally, one method of forming the liner has been to produce a number of sheet strips of impregnated liner material, which are applied to the bearing surface within the bearing housing to form a hemisphere of liner material. Whilst such a method has proved cost-effective, it does have certain technical drawbacks; most notably, it is difficult to bend the strips into a hemisphere without producing undesirable ripples, creases and wrinkles in the liner surface or gaps between strips of liner, all of which tend to compromise bearing performance.

One technique for forming spherical bearings, which is not best suited for forming lined bearings is that of providing a deformable bearing housing having a substantially hemispherical cup, placing a ball of suitable size within the bearing housing, and then deforming the bearing housing around the ball using a swage to form a finished bearing. Typically, a deformable bearing housing for use in this technique comprises a generally annular ring, which displays approximately circular symmetry around a central axis. The inner surface of the ring comprises a counterface portion in the form of a hemispherical cup, which is shaped to receive and closely fit against the surface of a ball placed in the bearing housing, and upstanding wall portion, which is substantially perpendicular to the central axis and allows the placement of the ball in the bearing housing to rest prior to deformation of the bearing housing. The hemispherical shape of the cup allows the counterface portion to lie against the lower half of the ball, up to and including the circumference of the ball taken in a plane perpendicular to the central axis and passing through the centre of the ball.

Such a method is not best suited to forming self-lubricating, lined bearings employing conventional "strip"-formed liners because, separate from any rippling or creasing which occurs as a result of initial application of the strips, when the bearing housing is deformed using the swage, the strips of self-lubricating liner tend to be stretched, creased or wrinkled as a result of the various compression and tension forces acting across the bearing surface during swaging. Indeed, with a conventional liner as described above, the degree of wrinkling and creasing, or the gaps created between strips of liner material, is such that the lubricating performance of the liner is unsatisfactorily compromised.

One method which has been developed in an attempt to reduce the problem of rippling and overlap of the self-lubricating liner, both upon application of the liner material to the bearing surface of the bearing housing and during the swaging process, involves producing the self-lubricating liner in the form of a flat net, incorporating a number of flap portions and darts. The net is designed so that, as far as possible, it can be bent or folded into a three dimensional liner having a surface which conforms closely to the bearing surface of a given bearing housing to be lined. However, it will be appreciated that the mapping of a flat piece of liner material onto a curved bearing surface can often only be achieved using a very complicated net for the liner, incorporating a number of complex flaps, darts and angled edges. The production of such a complicated net is very difficult and, indeed, in practice it has proved very difficult to produce a net which, when constructed in three dimensions, closely conforms to the bearing surface of a given bearing housing. As a result, when the net is constructed in three dimensions and the resulting three dimensional liner is placed within a given bearing housing, there are inevitably a number of gaps (caused by inaccuracies in the position and/or angle of darts included in the original net) and areas where the liner is creased or has been "doubled up" in thickness (due to inaccuracies in the size and position of one or more flaps in the original liner net). Such gaps, creases and areas of "doubled up" thickness result in the performance of the bearing being unsatisfactorily compromised.

A further disadvantage of conventional swaging techniques is that, when the wall portion is swaged around the bearing with a swage, the part of the inner surface at the junction of the cup and the wall portion, as well as other parts of the inner surface of the ball housing, press excessively tightly against the surface of the ball, thereby "pinching", and possibly deforming, the ball with the result that movement of the ball is restricted, leading to an unpredictable torque in the finished bearing.

Known techniques for attempting to alleviate the problem of "pinching" rely on forming the bearing housing so that the wall portion deforms more readily than the cup area so that the cup area is not stressed. For instance, it is known to leave additional thickness of material around an outer surface of the bearing housing in the vicinity of the cup area to strengthen this part of the bearing housing. Alternatively, it is know to remove material from the outer surface of the bearing housing in the vicinity of the wall portion, thereby making the wall portion less robust and more susceptible to deformation. However, the techniques suffer from the drawback of either making the bearing housing unnecessarily heavy, bulky and therefore expensive, or weakening a part of the housing bearing, leading to an increased likelihood of damage or failure. The disadvantages of excessive bulk and likelihood of failure is particularly serious in suspension systems, in which bearings in the form of ballpin joints are normally employed, as these systems often need to be both light and hard wearing, for example in the case of automobile suspension systems.

As a result of the disadvantages of using swaging techniques in the manufacture of lined, self-lubricating bearings, such bearings have tended to be manufactured by machining unique bearing housings and bearing members which co-operate with one another, the bearing member being retained within the bearing housing by means of a suitably configured retaining member, usually in the form of an annular retaining ring held in position at the entrance to the recess in the bearing housing by staking a portion of the rim of the bearing housing, so as to firmly hold the bearing member within the bearing housing. The need to manufacture separate components, such as a retaining member in the form of an annular ring, as well as the additional steps required to fix the retaining member in place, inevitably add to the manufacturing cost of the bearing.

It is an object of the present invention to seek to provide an improved bearing and an improved method of manufacturing a bearing.

Document US3239257 relates to elements having a low friction pressure engagement. US6213675 discloses an axial joint. US3562885 discloses a method of making bearings.

One aspect of the present invention provides a method of forming a self-lubricating, self-supporting, continuous bearing liner for a given bearing, comprising: providing an open-ended conical member formed from a lubricating material; moulding the member so as to closely conform to the bearing surface of an unswaged bearing housing to be lined.

Another aspect of the present invention provides a method of forming a self-lubricating, self-supporting, continuous bearing liner for a bearing, comprising: providing an open-ended conical member formed from a mesh material; providing an open-ended conical member formed from a lubricating material; placing one conical member at least partially within the other conical member; exposing the members to a pressure sufficient to force them against one another such that the lubricating material impregnates the mesh material; and moulding the members so as to closely conform to the bearing surface of an unswaged bearing housing to be lined.

Another aspect of the present invention provides a method of manufacturing a bearing comprising: providing a bearing housing incorporating a recess therein, the recess comprising a cup section shaped to receive part of a bearing member and a conforming section, extending from the cup section and incorporating the open end of the recess, the conforming section meeting the cup section at a transition boundary; inserting a pre-formed, self-lubricating, self-supporting, continuous, liner through the open end to sit in the recess, the liner being chosen to approximately conform to the initial shape of the recess when inserted therein; inserting a bearing member into the recess through the open end such that the liner is positioned inbetween the surfaces of the bearing member and recess; swaging the bearing housing in such a way that the recess and liner each conform to the shape of the bearing member and the area of the open end of the recess is reduced in size to prevent removal of the bearing member from the housing during normal use of the bearing.

Another aspect of the present invention provides a self-lubricating bearing comprising a bearing housing incorporating a recess formed therein, a bearing member seated within the recess, and a pre-formed, self-lubricating, self-supporting, continuous liner positioned inbetween the bearing member and the bearing housing, wherein the recess and liner conform closely to the shape of the bearing member in such a way as to prevent removal of the bearing member from the recess.

In order that the present invention may be more readily understood, embodiments thereof will now be described by way of example, with reference to the accompanying drawings, in which:
FIGURES 1A, 1B and 1C show a cross-section through a bearing according to the present invention at various stages of the method of manufacturing a bearing according to the present invention;
FIGURE 2 shows a partial cross-sectional view of a preferred form of bearing housing for use in a method of manufacturing a bearing according to the present invention.
FIGURE 3 shows a schematic perspective view of a generally cup-shaped portion of mesh formed in accordance with a preliminary step in a method of manufacturing a self-lubricating liner according to the present invention;
FIGURE 4 shows a schematic perspective view of a cup-shaped mesh member formed from the cup-shaped portion of Figure 3;
FIGURE 5 shows a schematic view, partly in cross-section and partly in phantom, of a tube of impregnating material created in accordance with a method of forming a self-lubricating liner according to the present invention;
FIGURE 6 shows a cross-sectional view of a conical member cut from the tube of Figure 5;
FIGURE 7 shows a schematic cross-sectional view illustrating the conical member of Figure 6 stretched over a male mould portion and placed within the cup-shaped member of Figure 4.
FIGURE 8 a schematic cross-sectional view illustrating the conical member and cup-shaped member in a mould prior to moulding;
FIGURE 9 shows a schematic cross-sectional view corresponding to Figure 8, during moulding of the conical and cup-shaped members; and
FIGURE 10 shows a cross-section through a self-lubricating liner formed by a method of manufacturing a self-lubricating liner according to the present invention;
FIGURE 11 shows a schematic cross-sectional view illustrating the conical member of another embodiment in a mould prior to moulding.

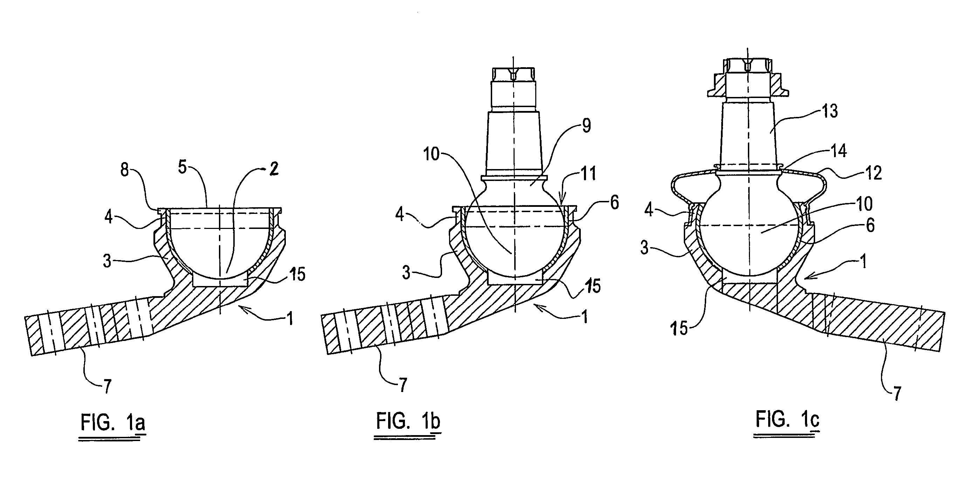

Figures 1A, 1B & 1C show a general overview of the method of manufacture of a self-lubricating bearing embodying the present invention. Referring specifically to Figure 1A, a bearing housing 1 is provided incorporating a recess 2 comprising a cup section 3 shaped to receive part of a bearing member, a conforming section 4 in the form of a circumferential wall extending from the cup section and incorporating the open end 5 of the recess 2, and a cylindrical sump 15 spanning the base of the cup section 3.

A pre-formed, self-lubricating, self-supporting, continuous, liner 6 is disposed in the recess 2, the liner 6 having been formed to conform with the initial shape of the cup section 3 and conforming section 4 of the recess 2. In the example shown in Figure 1A, the self-lubricating liner 6 is shown as conforming very closely to the inner surface of the recess 2; however, it is to be appreciated that such a close degree of conformity need not exist, provided that the self-lubricating liner 6 approximately conforms to the inner surface of the recess 2. In any event, it is to be noted that the liner has an open end which does not span the sump 15, for reasons described below.

In the example shown in Figure 1A, the bearing housing 1 incorporates an integral arm 7, extending, in this particular example, away from the portion of the housing 1 incorporating the recess 2, and which may be used to mount the bearing housing during operation.

The bearing housing 1 is preferably formed of a metal such as steel, and may be machined using conventional techniques, as will be readily understood by the person skilled in the art. Preferably, the bearing housing incorporates a lip 8 around the rim of the open end 5 of the recess 2, the function of which is described below.

Turning now to Figure 1B, which shows an intermediate stage of the manufacturing process, it can be seen that a bearing member, in this case in the form of a ballpin 9, has been inserted through the open end 5 of the recess 2 and seated within the recess 2 so as to sandwich the liner 6 between a ball 10 of the ballpin 9 and the inner surface of the recess 2. It will be appreciated that, due to the relative geometry of the ball portion 10 and recess 2, an annular space, indicated at 11, will exist between the ball 10 and the conforming portion 4 of the housing 1. In addition, it will further be appreciated that a gap exists between the ball 10 and the walls of the sump 15. It should be noted that the step of seating the ball 10 in the recess 2 will serve to conform the shape of the liner 6 more closely to the shape of the recess 2.

Figure 1C shows the finished configuration of the bearing, after swaging of the bearing housing. It can be seen that the swaging of the conforming portion 4 of the bearing housing 1 has closed the space 11 (Figure 1B) so that the liner 6 and the conforming portion 4 now each closely conform to the shape of the ball portion 10 of the ballpin 9. Furthermore, it will be appreciated that deformation of the conforming portion 4 and the liner 6 has reduced the area of the open end 5 of the recess 2 (see Figure 1A), with the result that removal of the ball 10, and hence the entire ballpin 9, through the open end of the recess 2 is prevented, at least during normal operation of the bearing.

A cover sleeve or seal 12 may be fitted to the housing and stand portion 13 of the ballpin 9 to prevent contamination of the bearing surfaces which may compromise the operational performance of the bearing. In the present example, the cover sleeve 12 is constructed from a resilient, preferably rubber, material which grips the stem 13 and the conforming portion 4 in a friction fit. Retention of the cover sleeve 12 is aided by the lip portion 8, as well as a flange portion 14 located on the stem 13.

It will be appreciated, from Figures 1A to 1C, that the principal area of deformation of the housing occurs above the equator of the ball portion 10; that is to say, deformation principally occurs within the conforming portion 4 of the bearing housing, rather than the cup portion 3. The cup portion 3 need not and should not itself be swaged because, on the one hand, the liner 6 has been pre-formed so as to approximately conform to the initial shape of the recess even prior to insertion of the bearing member (i.e. ballpin 9) whilst, on the other hand, the cup portion does not extend above the equator of the ball portion 10 so that swaging of the cup portion 3 is not required in order to retain the ball portion 10 within the recess 2.

Moreover, whilst deformation of the conforming portion inevitably occurs as a consequence of the swaging process, it will be noted that the conforming portion 4 represents only a small portion of the recess 2, and hence corresponds to only a small area of the bearing surface between the ball portion 10 and recess 2, with the result that any rippling, creasing or wrinkling produced within the area of the liner 6 adjacent the conforming portion 4 is confined to only a very minor portion of the bearing surface.

In any event, it will be appreciated that, because the liner is in the form of an integral, pre-formed liner, no gaps will occur in the liner across the conforming portion 4 of the bearing housing 1.

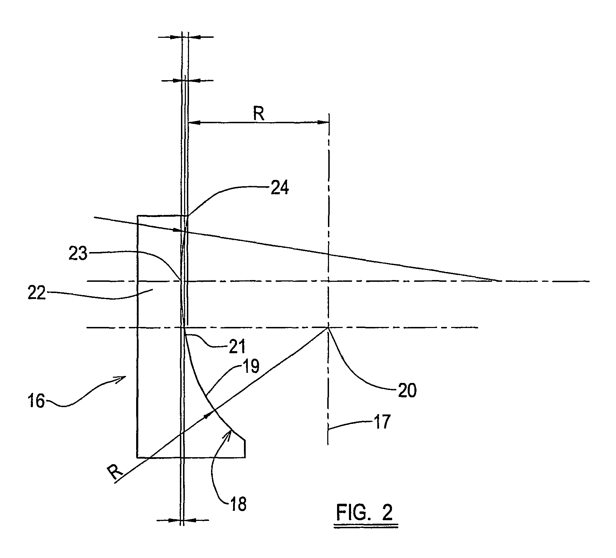

Figure 2 shows another embodiment of the bearing housing which may be substituted for bearing housing 1, and which addresses the problem of "pinching" of the bearing member by the bearing housing during the swaging process.

Referring to Figure 2 the alternative bearing housing 16 is generally of a ring shape (in the same sense as bearing housing 1) and has at least approximately circular symmetry about the central axis 17 thereof.

The inner surface 18 of the bearing housing 16 comprises a cup section 19, each point of which lies at least approximately at a distance R from a centre point 20, which distance R corresponds to the radius of the bearing member to be inserted into the bearing housing 16. In contrast with the bearing housing 1 shown in Figures 1A to 1C, the cup section 19 of the bearing housing 16 does not extend as far as the plane that is perpendicular to the central axis 17 and passes through the centre point 20 (i.e. the equatorial plane of a bearing member inserted into the housing). Rather, the cup section 19 ends at a transition boundary 21 (which transition boundary, it will be appreciated, forms a continuous ring around the inner surface of the bearing housing recess) so that the cup section 19 of the bearing housing 16 contacts less of the surface of a bearing member placed therein than does the corresponding cup section 3 of the bearing housing 1 of Figures 1A to 1C. Above the transition boundary, the bearing housing 16 comprises a conforming section 22, the inner surface of which lies at a distance greater than R from the centre point 20.

It will be appreciated, from Figure 2, that, when a bearing member, having radius R, is inserted into the housing 16, a clearance gap will exist between the bearing member and the conforming section 22 immediately adjacent the transition boundary, the clearance gap being larger than any clearance between the cup section 19 and the bearing member.

Above the transition boundary, the inner surface of the conforming portion describes a smooth arc, which reaches a far point 23, at which the distance of the inner surface of the conforming section 22 from the central axis 17 is greatest, before curving back in towards the central axis 17 to an end point 24. This smooth arc meets the cup section 19, at the transition boundary 21, at a tangent to the radius of the cup section 19, so that the entire inner surface 18 of the bearing housing 16 is comprised of a series of arcs with smooth transitions between the radii of the arcs so as to be substantially free of discontinuities. The distance of the end point 24 from the central axis 17 is preferably substantially equal to R, and it will be appreciated that this arrangement allows the insertion of a ball having radius R into the bearing housing 16 prior to swaging thereof.

When a ball having radius R is inserted into the bearing housing 16 and the bearing housing 16 is deformed around the ball by use of a swage, it has been found that the configuration of the inner surface 18 of the bearing housing 16 substantially reduces or eliminates "pinching" of the bearing i.e. bearing housing 16.

It will be appreciated that, although in the preferred embodiment shown the conforming section 22 presents a continuous concave bearing surface, the actual form of the bearing surface presented by the conforming section 22 can be varied in a great number of ways, provided that the clearance gap exists, as hereinbefore described, between the conforming section and bearing member (when the bearing member has been inserted into the bearing housing 16) immediately adjacent the transition boundary 21.

It will be appreciated that the bearing housing 16 is readily interchangeable with the bearing housing 1 in the method of the present invention, it merely being necessary to mould the pre-formed, self-lubricating, continuous, liner so that it conforms closely to the curved inner surface 18. Furthermore, it will be appreciated that the bearing housing 16 may incorporate a sump similar to sump box section 15 (see Figures 1A, 1B and 1C).

In addition to the advantages described above, it will be appreciated that, after swaging the bearing housings 1 or 16, no separate retaining member is needed to retain the bearing member within the bearing housing during use, this retaining action being pre-formed by the swaged conforming portion of the bearing housing and resulting reduction in the area of the open end of the bearing housing. Thus, the number of independent components in the finished bearing is reduced as compared to conventional bearings previously described, with the result that the manufacturing cost of the bearings embodying to the present invention tends to be reduced as compared to conventional machining processes.

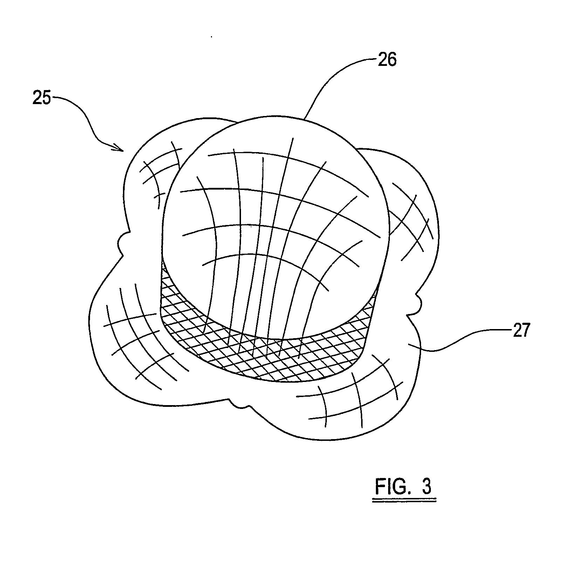

Turning now to Figures 3 to 10, a method of preforming the self-lubricating, self-supporting, continuous liner 6 will now be described.

Figures 3 to 10 represent a very simple, schematic representation of a method of preforming the self-lubricating, self-supporting, continuous liner embodying the present invention.

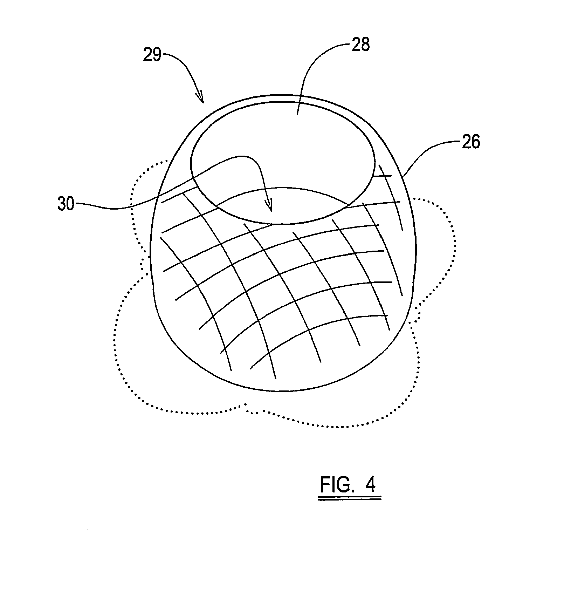

Referring to Figure 3, a sheet of mesh material 25 such as, for example phosphor bronze or stainless steel is initially stamped or otherwise moulded to form a preliminary cup-shaped portion 26 extending from planar flange portion 27, and then subsequently stamped further to form a hole 28 in the upper part of the cup portion 26 and to remove planar flange portion 27 (see Figure 4). Thus, an open ended cup-shaped member 29 is formed from the mesh material incorporating the hole 28 opposite the open end 30.

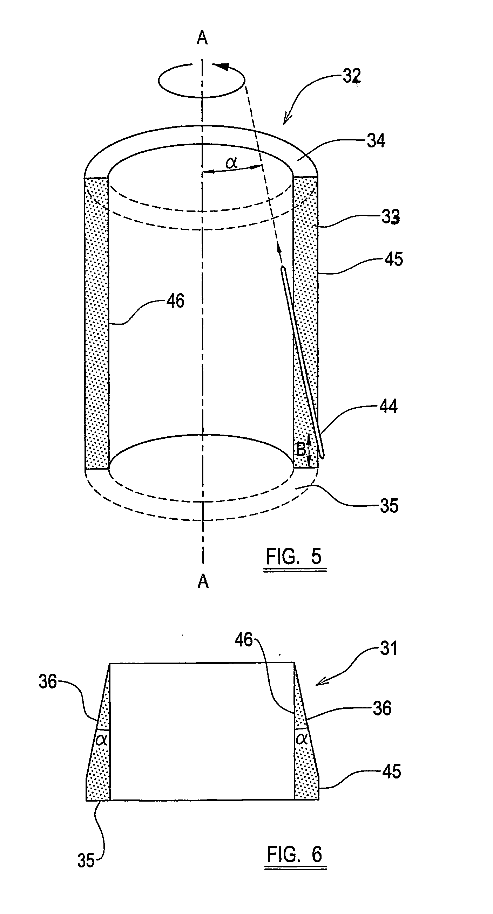

In addition to the formation of the above mentioned cup-shaped mesh member 29, a separate, open ended, conical member 31 (see Figure 6) is also formed, from an impregnating material such as, for example, a PTFE material, in particular Crossflon™.

Referring to Figure 5, the conical member 31 is formed by initially preparing the require formulation of impregnating material, in a conventional manner, and then subsequently forming a tube 32 of the impregnating material incorporating a circumferential wall 33 defining an annular top surface 34 and annular base surface 35. The tube 32 may be formed in any conventional manner and, in particular, may be formed by injection moulding under a suitable pressure and temperature.

As indicated schematically in Figure 5, the tube 32 is mounted for rotation about its longitudinal axis A in conventional manner such as, for example, by means of mounting upon a rotating support plate at one or both ends (not shown).

In order to form the conical surface 36 of the conical member 31 (see Figure 6), the blade 44 of a conventional cutting machine (not shown) is advanced through the wall 33 of the tube 32 such that it cuts through both the outer circumferential surface 45 and inner circumferential surface 46 of the wall 33 of the tube 32 at an acute angle α, as shown in Figure 5. It will be immediately appreciated that the combination of rotating the tube 32 about the axis A and cutting action of the blade 44 at an angle α to the axis A will result in the blade 44 tracing a conical cutting surface i.e. a cutting surface defining at least a portion of a cone, in this case, a frusto conical surface, centred about the axis of rotation A and intersecting the outer circumferential surface 45 and inner circumferential surface 46 at an angle α.

Referring to Figure 6, the conical member 31 is defined by conical surface 36 (corresponding to the frusto conical cutting surface traced by the blade 44 during cutting), the outer circumferential surface 45, inner circumferential surface 46 and base surface 35.

It will be appreciated that the final form of the conical member 31 depends upon the thickness of the circumferential wall 33, as well as the angle a and the distance B (see Figure 5) between the base surface 35 and point of entry of the blade 44 through the outer circumferential surface 45. Thus, by closely controlling the geometry of the tube 32 and cutting position of the blade 44, the particular geometry of the conical member 45 can be precisely controlled and varied as desired. In particular, by forming the tube 32 with a very restricted central bore i.e. with the diameter of the inner circumferential surface 46 being much smaller than the diameter of the circumferential outer surface 45, the conical surface 36 can be formed to very nearly approximate a "true" conical surface (as opposed to a frusto conical surface).

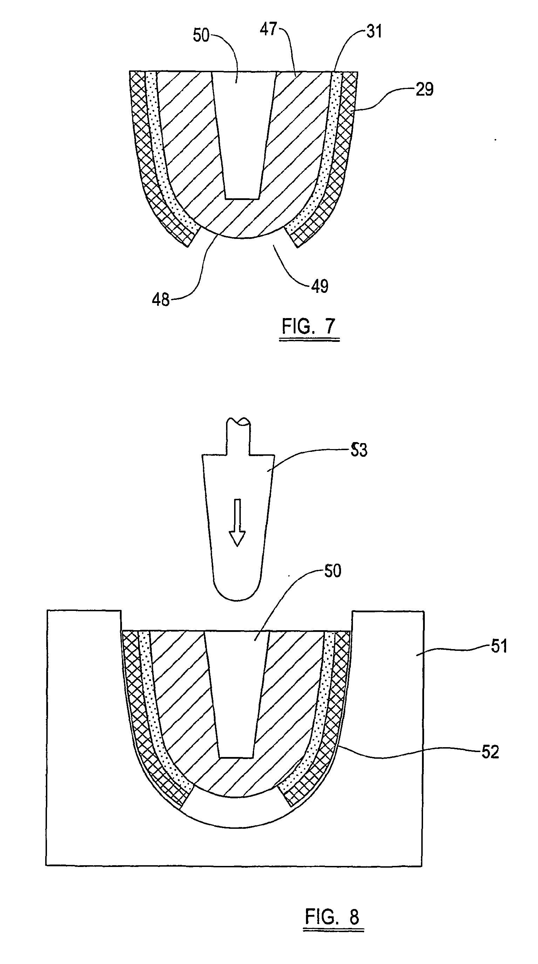

Once the conical member 31 has been formed, it is then stretched over a male mould portion which, in the preferred embodiment, is in the form of a first resiliently deformable mandrel 47 (see Figure 7). The mandrel 47 has a cup-shaped moulding surface 48 which conforms closely to the cup-shaped member 29, so that once the conical member 31 has been stretched over the moulding surface 48 of the mandrel 47, the external surface of the conical member 31 also closely conforms to the cup-shaped mesh member 29, as shown in Figure 7. In the present preferred embodiment, where the conical surface 36 is frusto conical, the conical member 31 will not entirely cover the moulding surface 48 of the mandrel 47, but rather a gap 49 will exist at the base of the moulding surface 48, coinciding with the location of the hole 28 in the cup-shaped mesh member 29. It will be appreciated that, by varying the precise shape of the conical member 31 as described above , and varying size of the hole 28, the gap 49 can be made coincidental with the width of the sump 15 of the bearing housing 1 (see Figures 1A, 1B, 1C). Moreover, by precisely controlling the shape of the conical member 31 in the manner described above, it is possible to ensure a good fit between the (stretched) conical member 1 and the mandrel 47.

The mandrel 47 is also provided with an axial recess, preferably in the form of a frusto conical recess 50 extending downwardly through the mandrel 47.

Referring now to Figure 8, the cup-shaped mesh member 29, stretched conical member 31 and mandrel 47 are all placed into a female mould portion 51 having a moulding surface 52 closely conforming to the bearing surface of the particular bearing housing to be lined (which, in the example shown in Figure 8 is the inner surface of recess 2 in Figure 1A). A second mandrel 53 is aligned directly above the recess 50 and arranged for a downward driving movement as indicated by the arrow in Figure 8. The mandrel 53 is configured so that it is too large to fit into recess 50 without resilient expansion of the walls of the recess 50.

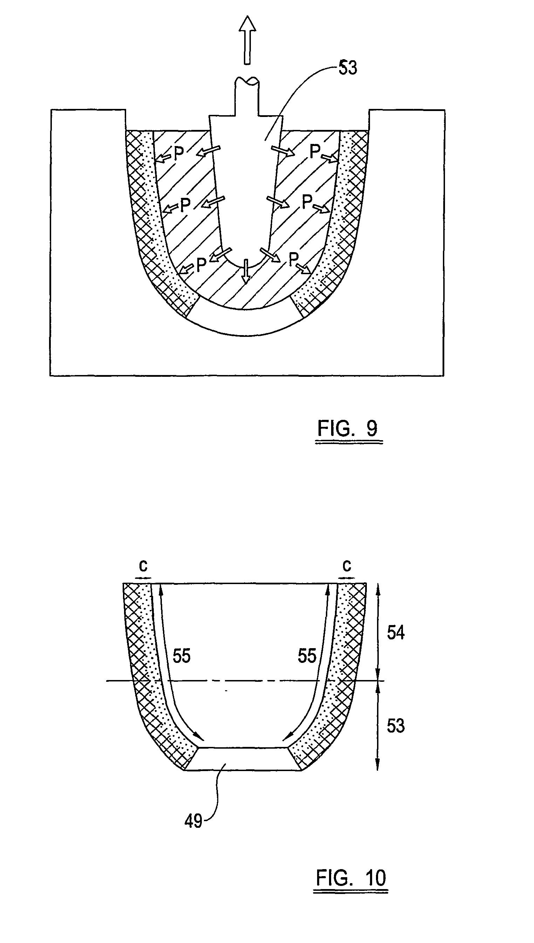

As shown in Figure 9, when the mandrel 53 is driven downwardly into the recess 50, it presses outwardly against the walls of the recess 50, (due to the dimensions of the mandrel 53) thus causing a resilient expansion of the recess 30 and consequently resiliently biasing the moulding surface 48 of the resilient first mandrel 47 against the conical member 31 and towards the cup-shaped member 29 and female mould portion 51, thereby exerting a pressure P on the conical member 31 and cup-shaped mesh member 29 (as illustrated by the arrows in Figure 9). The relative dimensions of the recess 50 and second mandrel 53 are specifically chosen so that the biasing pressure P is sufficiently high to cause the impregnating material forming the conical member 31 to impregnate the interstitial spaces of the mesh of the cup-shaped member 29, as indicated schematically in Figure 9. At the same time, the resilient biasing action of the mandrel 47 acts to sandwich the conical member 31 and cup-shaped member 29 between the mandrel 47 and moulding surface 52 of the female mould portion 51, thereby moulding the conical member and mesh member to the shape of the moulding surface 52.

It will be appreciated, from Figure 9, that as the conical member 31 impregnates the cup-shaped mesh member 29, the effective width of the resulting composite member will progressively decrease. Nevertheless, provided appropriate dimensions for the mandrel 53 and recess 50 are chosen, the resilient biasing action of the mandrel 47 towards the female portion 51 will ensure that the composite member remains sandwiched between the mandrel 47 and female mould portion 51, resulting in a sustained impregnation and moulding of the mesh member 29.

Once the conical member 31 has sufficiently impregnated the mesh member 29, the mandrel 53 may be withdrawn from the mandrel 47, as indicated by the arrow in Figure 9, and the mandrel 47 can then be withdrawn from the mould to leave the resulting liner 6 (see Figure 9).

Referring specifically to Figure 10, the final structure of the liner 6 is shown in cross-section. Thus, the liner 6 is formed of impregnated mesh material and comprises a cup portion 53 and a circumferential wall portion 54 extending upwardly from the cup portion 53 such that the cup portion and wall portion together conform closely to the bearing surface of the bearing housing 1 and define a continuous liner surface 55. The liner surface is continuous in the sense that it does not incorporate any gaps in the liner surface or any substantial overlapping of the liner upon itself - which discontinuities can present themselves as sharp changes in the thickness of the liner surface or, indeed, total absence of liner. There may be some level of overlap in the resultant liner but the degree of overlap is far less than is the case for the conventional strip formed liners discussed beforehand. As shown in Figure 9, the impregnated lubricating material, such as Crossflon™, impregnates the mesh material of the cup shaped mesh member 29 to a depth C which, in the preferred embodiment, corresponds to a depth of approximately two thirds of the final liner.

Although, in the present embodiment, the female mould portion 51 is configured to produce a liner 6 conforming to the bearing surface of bearing housing 1, it will nevertheless be appreciated that the final form of the liner can be varied to suit a given bearing housing to be lined, merely by appropriately configuring the moulding surface of female mould portion 51. In particular, it will be appreciated that, by modifying the moulding surface of the female mould portion 51, a liner can be produced which comprises a wall portion which is itself concave such that wall portion and cup portion together conform to the inner surface 18 of the bearing housing 16.

Although it is possible, using the present method, to produce a liner conforming closely to a given bearing housing to be lined, it is envisaged that, in a further preferred embodiment, the liner may be finally trimmed, in particular the wall portion of the liner, to ensure a closer fit to the bearing surface of the bearing housing to be lined.

Optionally, the liner may be etched upon its outer surface to aid formation of a better bond between the liner and bearing housing in the case where the liner is bonded to the bearing housing using an adhesive and the adhesive is applied to the outer surface of the liner.

In another embodiment, the bearing housing 1 may be formed without a sump 15, in which case the conical member 31 must be formed so that the conical surface 36 is very nearly "truly" conical, thus avoiding formation of the opening 49 as the conical member 31 is stretched over the mandrel 47. Although, in the present method, there exists an inevitable "trade-off" between forming a near "true" conical (as opposed to frusto conical) surface 36 and, on the other hand, ensuring that the open end of the conical member 31 (defined by the diameter of circumferential surface 46) is sufficiently large to allow stretching of the conical member 31 over the mandrel 47, it will be quickly appreciated by the skilled person that it is nevertheless possible to achieve a sufficient "balance" between these factors, so as to enable a reduction in size of any such opening in the liner so that bearing performance is not unduly compromised.

Whilst in the example described above, the mesh member 29 has been described as being provided in a cup-shape, it is also possible for the mesh member to be provided as a conical member, in a very similar way to that of the conical lubricating member.

In a method of manufacturing such a liner according to this embodiment, the conical lubricating member 31 is stretched over the male mould portion 47 as described above. The conical mesh member is then stretched, in turn, over the lubricating member already loaded onto the male mould portion 47. As before, the mould portion 47 is then driven into a female mould portion 51 to form a self-lubricating continuous liner. It will be appreciated that the impregnating of the lubricating member into the mesh member will occur in exactly the same way as herein before described when the mesh member is cup-shaped.

In another example of the invention, the self-lubricating, continuous bearing liner comprises only the lubricating member - i.e. with no mesh member provided.

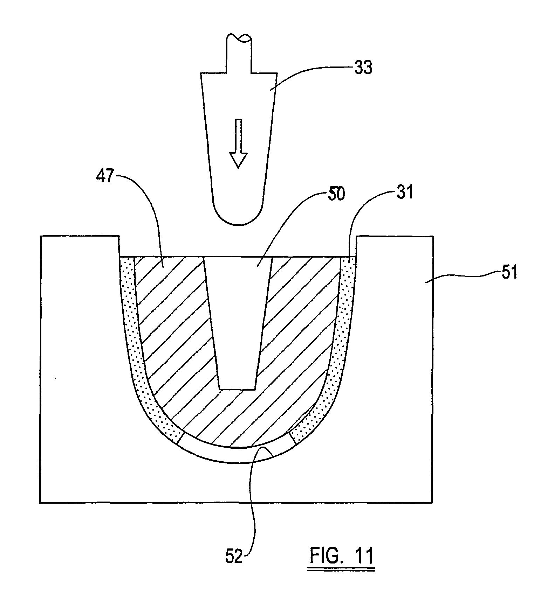

The method of forming the liner without the mesh member is substantially the same as the method hereinbefore described for the lubricating and mesh member composite liner. That is to say, with reference to Figure 11, an open ended conical lubricating member 31 is formed as shown in Figures 5 and 6 (and as described in the accompanying passage of description). The conical lubricating member 31 is then stretched over the male mould portion 47 as hereinbefore described. The male mould portion 47 and stretched conical lubricating member 31 are then placed into a female mould portion 51 as before.

A second mandrel 33 is then aligned directly above a recess 50 of the male mould portion 57 and arranged for a downward driving movement as shown in Figure 11.

As the second mandrel 33 is driven into recess 50, the liner is moulded to conform to the shape of the moulding surface 52.

This example, i.e. without a mesh member, is particularly advantageous in some situations in that it requires fewer parts and a less complex manufacturing method. It is particularly suitable for applications where bearing degradation is relatively low. However, for more heavy duty applications, the composite mesh and lubricating member liner may be more suitable.

In any event, it will be appreciated that all of the methods embodying the present invention hereinbefore described conveniently provide a self-lubricating, self-supporting, continuous, bearing liner for a given bearing. Importantly, in all examples of the invention, the liner surface is continuous in the sense that it does not incorporate any gaps in the liner surface or any substantial overlapping of the liner upon itself - which discontinuities can present themselves as sharp changes in the thickness of the liner surface or, indeed, total absence of liner. There may be some level of overlap in the resultant liner but the degree of overlap is far less than is the case for the conventional strip formed liners discussed beforehand.

Also important is that in all embodiments of the invention, the liner is self-supporting. In self-supporting is meant that the liner can maintain its shape and structure without need for support means external to the liner. Thus, even when not inserted in the bearing housing (where it would then rest against and be supported by the bearing surface of the housing), the liner in isolation will still support itself and comprise a cup portion and circumferential wall portion extending upwardly from the cup portion.

When used in this specification and claims, the terms "comprises" and "comprising" and variations thereof mean that the specified features, steps or integers are included. The terms are not to be interpreted to exclude the presence of other features, steps or components.

## Claims

1. A method of forming a self-lubricating, self-supporting and continuous bearing liner (6) for a given bearing, comprising:
providing an open-ended conical member (31) formed from a lubricating material;
moulding the member (31) so as to closely conform to the bearing surface of an unswaged bearing housing (1, 16) to be lined.

2. A method according to claim 1, further comprising:
providing a mould comprising a female mould portion (51) having a moulding surface (52) closely conforming to the bearing surface of the unswaged bearing housing (1, 16) to be lined, and a male mould portion (47);
stretching the conical member (31) over a moulding surface (48) of the male mould (47);
pressing the moulding surface of the male mould portion (47) towards the moulding surface of the female mould portion (51), thereby moulding the conical member (31).

3. A method of forming a self-lubricating, self-supporting and continuous bearing liner (6) for a bearing, comprising:
providing an open-ended conical member (29) formed from a mesh material;
providing an open-ended conical member (31) formed from a lubricating material;
placing one conical member (29, 31) at least partially within the other conical member (31, 29);
exposing the members (29, 31) to a pressure sufficient to force them against one another such that the lubricating material impregnates the mesh material; and
moulding the members (29, 31) so as to closely conform to the bearing surface of an unswaged bearing housing (1, 16) to be lined.

4. A method according to claim 3, further comprising:
providing a mould comprising a female mould portion (51) having a moulding surface (52) closely conforming to the bearing surface of the bearing housing (1, 16) to be lined, and a male mould portion (47);
stretching the conical lubricating member (31) over a moulding surface (48) of the male mould portion (47) prior to placing the conical lubricating member (31) within the conical mesh member (29);
pressing the moulding surface (48) of the male mould portion (47) towards the moulding surface (52) of the female mould portion (51), thereby moulding the conical members (29, 31) therebetween and exposing the members (29, 31) to sufficient pressure to cause said impregnation.

5. A method according to any of claims 3 or 4, wherein the conical mesh member (29) is formed in one piece by mechanical stamping from sheet mesh material.

6. A method according to claim 5, wherein, after stamping, the conical mesh member (29) is also mechanically trimmed.

7. A method according to claims 3 to 6, wherein the members (29, 31) are exposed to a pressure sufficient to cause impregnation of the mesh up to a depth of two-thirds of the mesh thickness.

8. A method according to any of claims 3 to 7, wherein the conical mesh member (29) is cup-shaped.

9. A method according to any preceding claim ,wherein the conical lubricating member (31) is formed by machine-cutting a tube (32) of said lubricating material.

10. A method according to claim 9, wherein the conical surface (36) of the conical member (31) is formed by:
advancing a blade (44) through the wall of the tube (32) at an acute angle to the axis of the tube (32) such that the blade (44) cuts through both the outer and inner circumferential surfaces of the tube wall (33); and
rotating the tube (32) about its axis such that the blade (44) traces a conical cutting surface centred about the axis of rotation and intersecting the outer and inner circumferential surfaces of the tube wall (33).

11. A method according to any of claims 2 or 4 to 10, wherein the male mould portion (47) is in the form of a first resiliently deformable mandrel incorporating an axial recess (50) and having a moulding surface (48) shaped to conform to the bearing surface of the unswaged bearing housing (1, 16) to be lined, a second mandrel (53) further being provided for driving into said recess (50) so as to press outwardly against the walls of the recess (50) and resiliently expand the recess (50), thereby resiliently biasing the moulding surface (48) of the first mandrel (47) towards the female mould portion (51).

12. A method according to any claim wherein the or at least one conical member (29, 31) is in the form of a frusto-conical member, open at each end.

13. A method according to any preceding claim, wherein the resulting structure is mechanically trimmed to size.

14. A liner or method according to any preceding claim, wherein the lubricating material is PTFE.

15. A liner or method according to any of claims 3 to 14, wherein the mesh is formed from phosphor bronze.

16. A method according to any of claims 3 to 14, wherein the mesh is formed from stainless steel.

17. A method according to claim 11, wherein the first mandrel (47) is formed from PEEK.

18. A method according to any preceding claim, wherein the resultant pre-formed, self-lubricating, self-supporting, continuous bearing liner (6) comprises a cup portion (53) and a circumferential wall portion (54) extending upwardly from the cup portion (53).

19. A method according to claim 18, wherein the wall portion (54) defines a substantially vertical portion of the liner surface.

20. A method according to claim 18, wherein the wall portion (54) defines a concave liner surface portion.

21. A method of manufacturing a bearing comprising:
providing a bearing housing (1, 16) incorporating a recess (2) therein, the recess (2) comprising a cup section (3, 19) shaped to receive part of a bearing member (10) and a conforming section (4, 22), extending from the cup section (3, 19) and incorporating on open end of the recess (2), the conforming section (4, 22) meeting the cup section (3, 19) at a transition boundary (21);
inserting a pre-formed, self-lubricating, self-supporting, continuous, liner (6) through the open end to sit in the recess (2), the liner (6) being chosen to approximately conform to the initial shape of the recess (2) when inserted therein;
inserting a bearing member (10) into the recess (2) through the open end such that the liner (6) is positioned inbetween the surfaces of the bearing member (10) and recess (2);
swaging the bearing housing (1, 16) in such a way that the recess (2) and liner (6) each conform to the shape of the bearing member (10) and the area of the open end of the recess (2) is reduced in size to prevent removal of the bearing member (10) from the housing (1, 16) during normal use of the bearing.

22. A method according to claim 21, wherein the bearing member (10) is the ball portion of a given ballpin.

23. A method according to any of claims 21 or 22, wherein the conforming section (4, 22) is shaped such that when the bearing member (10) is inserted into the recess (2), there exists a clearance gap between the bearing member (10) and the conforming section (4, 22) immediately adjacent the transition boundary (21), the clearance gap being larger than any gap between the cup section (3, 19) and the bearing member (10), whereby after deformation of the bearing housing (1, 16), the conforming section (4, 22) conforms closely to the ball portion immediately adjacent the transition boundary (21).

24. A method according to any of claims 21 to 23, wherein the inner surface of the conforming section (4, 22) is concave.

25. A method according to claim 24, wherein the cup section (3, 19) is in the form of a segment of a sphere, radius R.

26. A method according to claim 25, wherein the radius of arc of the conforming section (4, 22) is greater than R.

27. A method according to claim 26, wherein the radius of arc of the conforming section (4, 22) is at least double R.

28. A bearing comprising a bearing housing (1, 16) incorporating a recess (2) formed therein, a bearing member (10) seated within the recess (2), and a pre-formed, self-lubricating, self-supporting, continuous liner (6) positioned inbetween the bearing member (10) and the bearing housing (1, 16), wherein the recess (2) and liner (6) conform closely to the shape of the bearing member (10) in such a way as to prevent removal of the bearing member (10) from the recess (2).

29. A bearing according to claim 28, wherein the bearing member (10) is a ballpin (9).

30. A bearing according to claim 28, wherein the liner (6) is formed from a lubricating material.

31. A bearing according to claim 28, wherein the liner (6) is formed from a mesh material.

32. A bearing according to Claim 31, wherein the mesh material is impregnated with the lubricating material.

## Patentansprüche

1. Ein Verfahren zum Formen einer selbstschmierenden, selbsttragenden und fortlaufenden Lagerbeschichtung (6) für ein gegebenes Lager, das umfasst:
das Bereitstellen eines konischen Glieds (31) mit offenen Enden, das aus einem Schmiermaterial geformt wird;
das Formen des Glieds (31), das mit der Lagerfläche eines nicht im Gesenk geschmiedeten, zu beschichtenden Lagergehäuses (1, 16) nahezu formgleich ist.

2. Ein Verfahren gemäß Anspruch 1, das darüber hinaus umfasst:
das Bereitstellen einer Form, die einen Matrizenabschnitt (51) mit einer Formungsfläche (52), die mit der Lagerfläche des nicht im Gesenk geschmiedeten, zu beschichtenden Lagergehäuses (1, 16) nahezu formgleich ist, und einen Patrizenabschnitt (47) umfasst;
das Strecken das konischen Glieds (31) über eine Formungsfläche (48) der Patrize (47);
das Pressen der Formungsfläche des Patrizenabschnitts (47) in Richtung der Formungsfläche des Matrizenabschnitts (51), sodass das konische Glied (31) geformt wird.

3. Ein Verfahren zum Formen einer selbstschmierenden, selbsttragenden und fortlaufenden Lagerbeschichtung (6) für ein Lager, das umfasst:
das Bereitstellen eines konischen Glieds (29) mit offenen Enden, das aus einem Maschenmaterial geformt wird;
das Bereitstellen eines konischen Glieds (31) mit offenen Enden, das aus einem Schmiermaterial geformt wird;
das Positionieren eines konischen Glieds (29, 31) zumindest teilweise innerhalb des anderen konischen Glieds (31, 29);
das Einwirken eines Drucks auf die Glieder (29, 31), der ausreicht, um diese aneinander zu pressen, sodass das Schmiermaterial das Maschenmaterial imprägniert; und
das Formen der Glieder (29, 31), sodass diese mit der Lagerfläche eines nicht im Gesenk geschmiedeten, zu beschichtenden Lagergehäuses (1, 16) nahezu formgleich sind.

4. Ein Verfahren gemäß Anspruch 3, das darüber hinaus umfasst:
das Bereitstellen einer Form, die einen Matrizenabschnitt (51) mit einer Formungsfläche (52), die mit der Lagerfläche des zu beschichtenden Lagergehäuses (1, 16) nahezu formgleich ist, und einen Patrizenabschnitt (47) umfasst;
das Strecken das konischen Schmierglieds (31) über eine Formungsfläche (48) des Patrizenabschnitts (47) vor dem Positionieren des konischen Schmierglieds (31) innerhalb des konischen Maschenglieds (29);
das Pressen der Formungsfläche (48) des Patrizenabschnitts (47) in Richtung der Formungsfläche (52) des Matrizenabschnitts (51), sodass die konischen Glieder (29, 31) dazwischen geformt werden und auf die Glieder (29, 31) ein Druck einwirkt, der ausreicht, um die besagte Imprägnierung zu bewirken.

5. Ein Verfahren gemäß einem der Ansprüche 3 oder 4, bei dem das konische Maschenglied (29) in einem Stück durch mechanisches Stanzen aus einem bahnförmigen Maschenmaterial geformt wird.

6. Ein Verfahren gemäß Anspruch 5, bei dem nach dem Stanzen das konische Maschenglied (29) ebenfalls mechanisch zugeschnitten wird.

7. Ein Verfahren gemäß den Ansprüchen 3 bis 6, bei dem auf die Glieder (29, 31) ein Druck einwirkt, der ausreicht, um eine Imprägnierung der Maschen bis zu einer Tiefe von zwei Dritteln der Maschendicke zu bewirken.

8. Ein Verfahren gemäß einem der Ansprüche 3 bis 7, bei dem das konische Maschenglied (29) becherförmig ist.

9. Ein Verfahren gemäß einem der vorangehenden Ansprüche, bei dem das konische Schmierglied (31) durch maschinelles Schneiden einer Röhre (32) aus dem besagten Schmiermaterial geformt wird.

10. Ein Verfahren gemäß Anspruch 9, bei dem die konische Fläche (36) des konischen Glieds (31) geformt wird durch:
das Vorschieben einer Schneide (44) durch die Wand der Röhre (32) in einem spitzen Winkel zur Achse der Röhre (32), sodass die Schneide (44) sowohl die äußere als auch die innere Mantelfläche der Röhrenwand (33) durchschneidet; und
das Drehen der Röhre (32) um deren Achse, sodass die Schneide (44) eine konische Schnittfläche mit der Drehachse als Zentrum beschreibt, die die äußere und innere Mantelfläche der Röhrenwand (33) schneidet.

11. Ein Verfahren gemäß einem der Ansprüche 2 oder 4 bis 10, bei dem der Patrizenabschnitt (47) die Form eines ersten, elastisch verformbaren Dorns aufweist, der eine axiale Aussparung (50) enthält und eine Formungsfläche (48) aufweist, die so geformt ist, dass sie mit der Lagerfläche des nicht im Gesenk geschmiedeten, zu beschichtenden Lagergehäuses (1, 16) formgleich ist, wobei darüber hinaus ein zweiter Dorn (53) bereitgestellt wird, der in die besagte Aussparung (50) getrieben wird, sodass ein Druck nach außen hin auf die Wände der Aussparung (50) ausgeübt und die Aussparung (50) elastisch geweitet wird, sodass eine elastische Vorspannung der Formungsfläche (48) des ersten Dorns (47) in Richtung des Matrizenabschnitts (51) entsteht.

12. Ein Verfahren gemäß einem der Ansprüche, bei dem das konische Glied oder mindestens ein konisches Glied (29, 31) die Form eines an beiden Enden offenen Kegelstumpfglieds aufweist.

13. Ein Verfahren gemäß einem der vorangehenden Ansprüche, bei dem die resultierende Struktur mechanisch zugeschnitten wird.

14. Eine Beschichtung oder ein Verfahren gemäß einem der vorangehenden Ansprüche, wobei es sich bei dem Schmiermaterial um PTFE handelt.

15. Eine Beschichtung oder ein Verfahren gemäß einem der Ansprüche 3 bis 14, wobei die Maschen aus Phosphorbronze geformt werden.

16. Ein Verfahren gemäß einem der Ansprüche 3 bis 14, bei dem Maschen aus nicht rostendem Stahl geformt werden.

17. Ein Verfahren gemäß Anspruch 11, bei dem der erste Dorn (47) aus PEEK geformt wird.

18. Ein Verfahren gemäß einem der vorangehenden Ansprüche, bei dem die resultierende vorgeformte, selbstschmierende, selbsttragende, fortlaufende Lagerbeschichtung (6) einen Becherabschnitt (53) und einen vom Becherabschnitt (53) nach oben sich erstreckenden Umfangswandabschnitt (54) umfasst.

19. Ein Verfahren gemäß Anspruch 18, bei dem der Wandabschnitt (54) einen im Wesentlichen vertikalen Abschnitt der Beschichtungsfläche bestimmt.

20. Ein Verfahren gemäß Anspruch 18, bei dem der Wandabschnitt (54) einen im Wesentlichen konkaven Beschichtungsflächenabschnitt bestimmt.

21. Ein Verfahren zum Herstellen eines Lagers, das umfasst:
das Bereitstellen eines Lagergehäuses (1, 16), in dem eine Aussparung (2) enthalten ist, wobei die Aussparung (2) einen Becherabschnitt (3, 19), der so geformt ist, dass er einen Teil eines Lagerglieds (10) aufnimmt, und einen formgleichen Abschnitt (4, 22) umfasst, der sich vom Becherabschnitt (3, 19) aus erstreckt und ein offenes Ende der Aussparung (2) enthält, wobei der formgleiche Abschnitt (4, 22) an einer Übergangsbegrenzung (21) auf den Becherabschnitt (3, 19) trifft;
das Einführen einer vorgeformten, selbstschmierenden, selbsttragenden, fortlaufenden Beschichtung (6) durch ein offenes Ende, sodass diese in der Aussparung (2) sitzt, wobei die Beschichtung (6) so gewählt wird, dass sie mit der Ausgangsform der Aussparung (2) annähernd formgleich ist, wenn sie in diese eingeführt wird;
das Einführen eines Lagerglieds (10) in die Aussparung (2) durch das offene Ende, sodass die Beschichtung (6) zwischen den Flächen des Lagerglieds (10) und der Aussparung (2) positioniert wird;
das Gesenkschmieden des Lagergehäuses (1, 16) in einer Weise, durch die die Aussparung (2) und die Beschichtung (6) jeweils formgleich mit der Form des Lagerglieds (10) sind und der Bereich des offenen Endes der Aussparung (2) in seiner Größe so verringert wird, dass ein Entfernen des Lagerglieds (10) aus dem Gehäuse (1, 16) im bestimmungsgemäßen Gebrauch des Lagers verhindert wird.

22. Ein Verfahren gemäß Anspruch 21, bei dem das Lagerglied (10) der Kugelabschnitt eines gegebenen Kugelbolzens ist.

23. Ein Verfahren gemäß einem der Ansprüche 21 oder 22, bei dem der formgleiche Abschnitt (4, 22) so geformt ist, dass beim Einführen des Lagerglieds (10) in die Aussparung (2) unmittelbar neben der Übergangsbegrenzung (21) eine Abstandslücke zwischen dem Lagerglied (10) und dem formgleichen Abschnitt (4, 22) besteht, wobei die Abstandslücke gegebenenfalls größer als eine Lücke zwischen dem Becherabschnitt (3, 19) und dem Lagerglied (10) ist, wodurch nach der Verformung des Lagergehäuses (1, 16) der formgleiche Abschnitt (4, 22) mit dem unmittelbar neben der Übergangsbegrenzung (21) befindlichen Kugelabschnitt nahezu formgleich ist.

24. Ein Verfahren gemäß einem der Ansprüche 21 bis 23, bei dem die innere Fläche des formgleichen Abschnitts (4, 22) konkav ist.

25. Ein Verfahren gemäß Anspruch 24, bei dem der Becherabschnitt (3, 19) die Form eines Kugelsegments mit dem Radius R aufweist.

26. Ein Verfahren gemäß Anspruch 25, bei dem der Bogenradius des formgleichen Abschnitts (4, 22) größer als R ist.

27. Ein Verfahren gemäß Anspruch 26, bei dem der Bogenradius des formgleichen Abschnitts (4, 22) mindestens das Doppelte von R beträgt.

28. Ein Lager, das ein Lagergehäuse (1, 16), in dem eine darin geformte Aussparung (2) enthalten ist, ein Lagerglied (10), das innerhalb der Aussparung (2) sitzt, und eine vorgeformte, selbstschmierende, fortlaufende Beschichtung (6) umfasst, die zwischen dem Lagerglied (10) und dem Lagergehäuse (1, 16) positioniert ist, wobei die Aussparung (2) und die Beschichtung (6) in einer Weise nahezu formgleich mit der Form des Lagerglieds (10) sind, durch die das Entfernen des Lagerglieds (10) aus der Aussparung (2) verhindert wird.

29. Ein Lager gemäß Anspruch 28, bei dem das Lagerglied (10) ein Kugelbolzen (9) ist.

30. Ein Lager gemäß Anspruch 28, bei dem die Beschichtung (6) aus einem Schmiermaterial geformt wird.

31. Ein Lager gemäß Anspruch 28, bei dem die Beschichtung (6) aus einem Maschenmaterial geformt wird.

32. Ein Lager gemäß Anspruch 31, bei dem das Maschenmaterial mit dem Schmiermaterial imprägniert wird.

## Revendications

1. Un procédé de fabrication d'une garniture de roulement autolubrifiante, autonome et continue (6) pour un roulement donné, comprenant :
la fourniture d'un élément conique ouvert (31) fabriqué à partir d'un matériau lubrifiant,
le moulage de l'élément (31) de façon qu'il épouse étroitement la surface de contact d'un boîtier de roulement non embouti (1, 16) à revêtir.

2. Un procédé selon la Revendication 1, comprenant en outre :
la fourniture d'un moule comprenant une partie moule femelle (51) possédant une surface de moulage (52) épousant étroitement la surface de contact du boîtier de roulement non embouti (1, 16) à revêtir et une partie moule mâle (47),
l'étirement de l'élément conique (31) sur une surface de moulage (48) du moule mâle (47),
le pressage de la surface de moulage de la partie moule mâle (47) contre la surface de moulage de la partie moule femelle (51), moulant ainsi l'élément conique (31).

3. Un procédé de fabrication d'une garniture de roulement autolubrifiante, autonome et continue (6) pour un roulement, comprenant :
la fourniture d'un élément conique ouvert (29) fabriqué à partir d'un matériau à mailles,
la fourniture d'un élément conique ouvert (31) fabriqué à partir d'un matériau lubrifiant,
l'insertion d'un élément conique (29, 31) au moins partiellement à l'intérieur de l'autre élément conique (31, 29),
l'exposition des éléments (29, 31) à une pression suffisante pour les forcer l'un contre l'autre de sorte que le matériau lubrifiant imprègne le matériau à mailles, et
le moulage des éléments (29, 31) de façon qu'ils épousent étroitement la surface de contact d'un boîtier de roulement non embouti (1, 16) à revêtir.

4. Un procédé selon la Revendication 3, comprenant en outre :
la fourniture d'un moule comprenant une partie moule femelle (51) possédant une surface de moulage (52) épousant étroitement la surface de contact du boîtier de roulement (1, 16) à revêtir et une partie moule mâle (47),
l'étirement de l'élément lubrifiant conique (31) sur une surface de moulage (48) de la partie moule mâle (47) avant l'insertion de l'élément lubrifiant conique (31) à l'intérieur de l'élément à mailles conique (29),
le pressage de la surface de moulage (48) de la partie moule mâle (47) contre la surface de moulage (52) de la partie moule femelle (51), moulant ainsi les éléments coniques (29, 31) entre celles-ci et l'exposition des éléments (29, 31) à une pression suffisante pour entraîner ladite imprégnation.

5. Un procédé selon l'une quelconque des Revendications 3 ou 4, où l'élément à mailles conique (29) est fabriqué d'une seule pièce par estampage mécanique à partir d'un matériau à mailles en feuilles.

6. Un procédé selon la Revendication 5, où, après estampage, l'élément à mailles conique (29) est également rogné mécaniquement.

7. Un procédé selon les Revendications 3 à 6, où les éléments (29, 31) sont exposés à une pression suffisante pour entraîner une imprégnation du matériau à mailles jusqu'à une profondeur de deux tiers de l'épaisseur du matériau à mailles.

8. Un procédé selon l'une quelconque des Revendications 3 à 7, où l'élément à mailles conique (29) est cupuliforme.

9. Un procédé selon l'une quelconque des Revendications précédentes, où l'élément lubrifiant conique (31) est fabriqué par un découpage mécanique d'un tube (32) dudit matériau lubrifiant.

10. Un procédé selon la Revendication 9, où la surface conique (36) de l'élément conique (31) est fabriquée :
en faisant pénétrer une lame (44) dans la paroi du tube (32) à un angle aigu par rapport à l'axe du tube (32) de sorte que la lame (44) coupe au travers des surfaces circonférentielles à la fois intérieure et extérieure de la paroi du tube (33), et
en faisant tourner le tube (32) autour de son axe de sorte que la lame (44) trace une surface de découpage conique centrée autour de l'axe de rotation et intersectant les surfaces circonférentielles intérieure et extérieure de la paroi du tube (33).

11. Un procédé selon l'une quelconque des Revendications 2 ou 4 à 10, où la partie moule mâle (47) est de la forme d'un premier mandrin déformable élastiquement incorporant un évidement axial (50) et possédant une surface de moulage (48) façonnée de façon à épouser la surface de contact du boîtier de roulement non embouti (1, 16) à revêtir, un deuxième mandrin (53) étant fourni en outre pour pénétrer dans ledit évidement (50) de façon à presser vers l'extérieur contre les parois de l'évidement (50) et à étendre élastiquement l'évidement (50), orientant ainsi élastiquement la surface de moulage (48) du premier mandrin (47) vers la partie moule femelle (51).

12. Un procédé selon l'une quelconque des Revendications, où l'élément conique ou au moins un élément conique (29, 31) est de la forme d'un élément frusto-conique, ouvert à chaque extrémité.

13. Un procédé selon l'une quelconque des Revendications précédentes, où la structure résultante est rognée mécaniquement à la taille voulue.

14. Une garniture ou un procédé selon l'une quelconque des Revendications précédentes, où le matériau lubrifiant est du polytétrafluoréthylène (PTFE).

15. Une garniture ou un procédé selon l'une quelconque des Revendications 3 à 14, où le matériau à mailles est fabriqué à partir de bronze phosphoreux.

16. Un procédé selon l'une quelconque des Revendications 3 à 14, où le matériau à mailles est fabriqué à partir d'acier inoxydable.

17. Un procédé selon la Revendication 11, où le premier mandrin (47) est fabriqué à partir de polyéther-éthercétone (PEEK).

18. Un procédé selon l'une quelconque des Revendications précédentes, où la garniture de roulement autolubrifiante, autonome, continue, préfabriquée résultante (6) comprend une partie cupuliforme (53) et une partie paroi circonférentielle (54) s'étendant vers le haut à partir de la partie cupuliforme (53).

19. Un procédé selon la Revendication 18, où la partie paroi (54) définit une partie substantiellement verticale de la surface de la garniture.

20. Un procédé selon la Revendication 18, où la partie paroi (54) définit une partie concave de la surface de la garniture.

21. Un procédé de manufacture d'un roulement comprenant :
la fourniture d'un boîtier de roulement (1, 16) incorporant un évidement (2) à l'intérieur de celui-ci, l'évidement (2) comprenant une section cupuliforme (3, 19) façonnée de façon à recevoir une partie d'un élément de roulement (10) et une section conforme (4, 22), s'étendant de la section cupuliforme (3, 19) et incorporant une extrémité ouverte de l'évidement (2), la section conforme (4, 22) rencontrant la section cupuliforme (3, 19) à une limite de transition (21),
l'insertion d'une garniture autolubrifiante, autonome, continue, préfabriquée (6) au travers de l'extrémité ouverte de façon à la loger dans l'évidement, la garniture (6) étant choisie de façon à épouser approximativement la forme de départ de l'évidement (2) lorsqu'elle est insérée à l'intérieur de celui-ci,
l'insertion d'un élément de roulement (10) dans l'évidement (2) au travers de l'extrémité ouverte de sorte que la garniture (6) soit positionnée entre les surfaces de l'élément de roulement (10) et l'évidement (2),
l'emboutissage du boîtier de roulement (1, 16) de telle manière que l'évidement (2) et la garniture (6) épousent chacun la forme de l'élément de roulement (10) et que la zone de l'extrémité ouverte de l'évidement (2) est réduite en taille de façon à éviter le retrait de l'élément de roulement (10) du boîtier (1, 16) au cours de l'utilisation normale du roulement.

22. Un procédé selon la Revendication 21, où l'élément de roulement (10) est la partie rotule d'une queue de rotule donnée.

23. Un procédé selon l'une quelconque des Revendications 21 ou 22, où la section conforme (4, 22) est façonnée de sorte que, lorsque l'élément de roulement (10) est inséré dans l'évidement (2), il existe un espace libre entre l'élément de roulement (10) et la section conforme (4, 22) immédiatement adjacent à la limite de transition (21), l'espace libre étant plus grand que tout espace entre la section cupuliforme (3, 19) et l'élément de roulement (10), grâce à quoi après déformation du boîtier de roulement (1, 16), la section conforme (4, 22) épouse étroitement la partie rotule immédiatement adjacente à la limite de transition (21).

24. Un procédé selon l'une quelconque des Revendications 21 à 23, où la surface intérieure de la section conforme (4, 22) est concave.

25. Un procédé selon la Revendication 24, où la section cupuliforme (3, 19) est de la forme d'un segment d'une sphère de rayon R.

26. Un procédé selon la Revendication 25, où le rayon d'arc de la section conforme (4, 22) est plus grand que R.

27. Un procédé selon la Revendication 26, où le rayon d'arc de la section conforme (4, 22) est au moins le double de R.

28. Un roulement comprenant un boîtier de roulement (1, 16) incorporant un évidement (2) formé à l'intérieur de celui-ci, un élément de roulement (10) logé à l'intérieur de l'évidement (2) et une garniture de roulement continue, autolubrifiante, autonome et préfabriquée (6) positionnée entre l'élément de roulement (10) et le boîtier de roulement (1, 16), où l'évidement (2) et la garniture (6) épousent étroitement la forme de l'élément de roulement (10) de manière à éviter le retrait de l'élément de roulement (10) de l'évidement (2).

29. Un roulement selon la Revendication 28, où l'élément de roulement (10) est une queue de rotule (9).

30. Un roulement selon la Revendication 28, où la garniture (6) est fabriquée à partir d'un matériau lubrifiant.

31. Un roulement selon la Revendication 28, où la garniture (6) est fabriquée à partir d'un matériau à mailles.

32. Un roulement selon la Revendication 31, où le matériau à mailles est imprégné d'un matériau lubrifiant.
